# FASCICULE DE BREVET EUROPEEN

(11) **EP 3 753 399 B1**
(45) Date de publication et mention de la délivrance du brevet: **09.03.2022**
(21) Numéro de dépôt: 20180082.8
(22) Date de dépôt: 15.06.2020
(51) Int. Cl.: A01K 1/10, A01K 5/01

(54) **RÂTELIER PLIABLE POUR ANIMAUX D'ÉLEVAGE**
ZUSAMMENKLAPPBARE FUTTERRAUFE FÜR ZUCHTTIERE
FOLDING HAYRACK FOR FARM ANIMALS

(30) Priorité: 17.06.2019 FR 1906475
(43) Date de publication de la demande: 23.12.2020
(73) Titulaire: Tubex, 45300 Escrennes (FR)
(72) Inventeur: JOURDAIN, Dominique, 45300 Escrennes (FR)
(74) Mandataire: Cabinet Beau de Loménie

(56) Documents cités:
- AU-A1- 2011 200 625
- DE-C- 742 474
- FR-A- 1 336 616
- US-A1- 2006 070 580

## Description

### Domaine Technique

Le présent exposé concerne le domaine de l'alimentation des animaux d'élevage tels que du bétail, et notamment un râtelier destiné à recevoir du foin pour nourrir les animaux.

### Technique antérieure

Les râteliers destinés à être disposés dans des prés pour nourrir les animaux sont généralement formés par un assemblage de pièces métalliques. Il est connu de livrer ces râteliers sous forme de pièces détachées, et de les assembler sur place. En particulier, avant leur livraison, les pièces détachées des râteliers sont regroupées de manière à former un colis individuel pour chaque râtelier, facilitant leur stockage et leur transport.

DE 742 474 C divulgue un râtelier suivant le préambule de la revendication 1. US 2006/070580 A1 divulgue un râtelier comprenant un châssis, des pieds, et au moins deux éléments pliables fixés sur deux côtés opposés dudit châssis, deux montants de chaque élément pliable étant fixés au châssis au moyens d'une liaison articulé.

Toutefois, le nombre important de pièces détachées que comprennent ces colis rend la phase de montage du râtelier longue et complexe pour les revendeurs et les utilisateurs. Le temps de montage peut être par exemple d'environ une heure et demie. Ces inconvénients représentent un frein à la vente et à la distribution de ces râteliers. En particulier, la distribution de ces râteliers dans des magasins spécialisés tels que des magasins de vente de produits agricoles, nécessitent d'exposer les râteliers montés devant le magasin. Le temps et la complexité de montage représentent, à l'heure actuelle, un handicap dans la vente et la distribution de ces râteliers dans ce type de magasins.

Il existe donc un besoin pour des râteliers dont la structure permet à la fois de faciliter le stockage et le transport sous forme de colis, tout en simplifiant et en limitant leur temps de montage après livraison.

### Exposé de l'invention

Le présent exposé vise à améliorer cet état de la technique en proposant un râtelier pliable pour animaux d'élevage tels que du bétail permettant de remédier aux inconvénients précités.

A cet égard, le râtelier pliable comprend un châssis ayant un cadre de châssis portant une structure de plancher configurée pour recevoir du fourrage pour les animaux, des pieds fixés de manière escamotable au châssis, et au moins deux éléments pliables fixés sur deux côtés opposés dudit châssis, chaque élément pliable comprenant deux montants et une structure de barrière ajourée s'étendant entre et étant portée par les deux montants, les deux montants de chaque élément pliable étant chacun fixés au châssis au moyen d'une liaison articulée, de manière à ce que les éléments pliables soient mobiles entre une position dépliée permettant le passage de la tête des animaux à travers la barrière, et une position repliée dans laquelle les éléments pliables sont repliés sur une face supérieure de la structure de plancher, les éléments pliables étant des éléments latéraux, le râtelier comprenant en outre une barrière arrière et une barrière avant disposées entre les éléments latéraux lorsqu'ils sont en position dépliée, et fixées aux montants desdits éléments latéraux.

Le châssis peut comprendre un assemblage de tubes métalliques, formant notamment un cadre de châssis et des tubes transversaux connectés et fixés aux différents côtés du cadre.

Par « fixés de manière escamotable », on comprend que les pieds peuvent adopter une position active, dans laquelle ils sont en contact avec le sol de manière à surélever le châssis par rapport au sol, et une position inactive, dans laquelle ils peuvent être disposés contre la structure de plancher avec un encombrement limité par rapport à celui de cette structure, par exemple en étant disposés sur leur flanc contre une face inférieure de la structure de plancher. Cette position inactive, ou position de rangement dans laquelle le châssis n'est plus surélevé par rapport au sol, permet notamment de rendre le râtelier plus compact et de faciliter ainsi son stockage et son transport. A cette fin, les pieds peuvent par exemple être fixés de manière démontable sur le châssis.

Par « structure de barrière ajourée », on comprend la structure comprenant la barrière seule, sans les montants. Plus précisément, la structure de barrière ajourée en position verticale comprend une pluralité de tubes verticaux s'étendant entre deux longerons horizontaux, présentant chacun deux extrémités libres. Cette structure de barrière ajourée est fixée aux montants de manière à former une seule et même pièce.

La position dépliée, ou position relevée des éléments pliables permet aux animaux d'accéder à la nourriture disposée sur la structure de plancher. Les barrières arrière et avant sont des pièces escamotables, pouvant être fixées aux montants des éléments latéraux, et détachés de ces derniers. Lorsque les éléments pliables sont en position dépliée, les barrières arrière et avant fixées aux montants des éléments pliables agissent comme des entretoises permettant de maintenir ces derniers en position dépliée.

Dans la position repliée, les deux éléments pliables sont disposés contre la structure de plancher. Plus précisément, un premier élément pliable peut être replié contre la face supérieure de la structure de plancher, et le second élément pliable peut être replié contre le premier élément pliable.

Dans cette position repliée, le râtelier forme une structure compacte, facilitant son stockage et son transport. On notera que le râtelier peut comprendre d'autres éléments disposés sur les éléments pliables en position repliée, pour former ainsi un colis. En outre, le montage des éléments pliables, après livraison du râtelier par exemple, peut s'effectuer simplement en dépliant ces derniers, c'est-à-dire en passant de la position repliée à la position dépliée par l'intermédiaire des liaisons articulées. Cette structure permet de limiter le nombre de pièces détachées, les éléments pliables étant déjà fixés au châssis, et ainsi de simplifier et de limiter le temps de montage du râtelier.

Dans certains modes de réalisation, la liaison articulée est une liaison pivot d'axe horizontal.

Par « horizontal », on comprend un axe sensiblement parallèle au plan formé par le support sur lequel est disposé le râtelier, notamment le sol. Ainsi, les éléments pliables peuvent passer de la position dépliée à la position repliée, ou inversement, en pivotant autour de l'axe horizontal. Un tel déplacement peut être effectué aisément et rapidement de manière manuelle.

Dans certains modes de réalisation, le châssis comprend au moins un support de montant pour chaque montant, les supports de montant étant fixés au cadre de châssis, et chaque montant des éléments pliables étant fixé à un support de montant au moyen de la liaison articulée.

Le châssis peut par exemple comprendre quatre supports de montant, un support de montant étant fixé à chaque coin du cadre de châssis. Ainsi, les éléments pliables peuvent passer de la position dépliée à la position repliée en pivotant par rapport aux supports de montant. Les montants étant fixés aux supports de montant, et non directement sur le cadre de châssis, les éléments pliables peuvent ainsi être repliés plus aisément contre la face supérieure de la structure de plancher, permettant en outre d'obtenir une structure plus compacte en position repliée.

Dans certains modes de réalisation, selon une direction perpendiculaire à la structure de plancher, les supports de montant présentent une longueur comprise entre 25 et 50 cm, de préférence entre 30 et 45 cm.

Lorsque les éléments de support sont en position repliée, contre la face supérieure de la structure de plancher, seuls les supports de montant font saillie depuis le cadre de châssis, de part et d'autre de celui-ci, dans la direction perpendiculaire à la structure de plancher. En d'autres termes, en position repliée, l'encombrement vertical du râtelier est défini par les supports de montant. Les valeurs ci-dessus permettent ainsi d'obtenir une structure compacte, lorsque les éléments pliables sont en position repliée, facilitant le stockage et le transport du râtelier.

Dans certains modes de réalisation, selon une direction perpendiculaire à la structure de plancher, une distance entre le cadre de châssis et la liaison articulée entre le montant et le support de montant est inférieure à 15 cm, de préférence inférieure à 10 cm.

En d'autres termes, la liaison articulée, notamment la liaison pivot, est décalée dans la direction perpendiculaire par rapport au cadre de châssis. Les éléments pliables peuvent ainsi être repliés plus aisément contre la face supérieure de la structure de plancher. Par ailleurs, la distance entre le cadre de châssis et la liaison articulée entre le montant et le support de montant permet, en position repliée, de laisser un espace entre au moins un des éléments pliables en position repliée et la structure de plancher, dans lequel d'autres éléments du râtelier peuvent être disposés. Le râtelier peut ainsi être stocké de manière compacte, facilitant en outre son transport.

Dans certains modes de réalisation, les pieds sont fixés aux supports de montant.

On comprend donc que les supports de montant s'étendent de part et d'autre de la structure de plancher selon la direction perpendiculaire à cette structure de plancher. Ainsi, les montants des éléments pliables sont fixés aux supports de montant d'un côté supérieur à la structure de plancher, et les pieds sont fixés aux supports de montant d'un côté inférieur à la structure de plancher. Le fait que les éléments pliables et les pieds soient fixés aux supports de montant permet de simplifier la structure globale du râtelier.

Dans certains modes de réalisation, les pieds sont fixés au châssis de manière articulée, de manière à ce que les pieds soient mobiles entre une position dépliée permettant de surélever le cadre de châssis par rapport au sol, et une position repliée dans laquelle les pieds sont repliés sur une face inférieure de la structure de plancher.

Les pieds peuvent par exemple passer de la position dépliée à la position repliée, ou inversement, en pivotant autour d'un axe horizontal. Un tel déplacement peut être effectué aisément et rapidement de manière manuelle. Par ailleurs, une telle configuration permet de limiter davantage le temps de montage ou de démontage du râtelier.

Dans certains modes de réalisation, les pieds sont des arceaux présentant chacun deux extrémités, chaque extrémité étant fixée à un support de montant.

Dans certains modes de réalisation, au moins un support de montant comprend un moyen de verrouillage comprenant un axe pour verrouiller un élément pliable dans la position dépliée.

L'axe est configuré de manière à pouvoir s'insérer dans un orifice à travers à la fois le support de montant et le montant de l'élément pliable, afin de maintenir ce dernier en position dépliée. Le maintien, ou blocage des éléments pliables en position dépliée peut ainsi être effectué aisément et rapidement en insérant simplement l'axe dans l'orifice correspondant. La rapidité de montage du râtelier est ainsi encore améliorée. L'axe peut être une goupille attachée au cadre de support. De manière alternative, le moyen de verrouillage peut comprendre un boulon, comportant une vis et écrou, permettant de limiter le risque d'un retrait non souhaité de l'élément de verrouillage.

Dans certains modes de réalisation, le râtelier est un premier râtelier dans lequel les supports de montant comprennent une patte faisant saillie depuis leur extrémité inférieure, chaque patte étant configurée pour s'emmancher dans une extrémité supérieure d'un support de montant d'un deuxième râtelier analogue au premier râtelier, lors de l'empilage du premier râtelier sur le deuxième râtelier.

En d'autres termes, lorsque deux râteliers sont en position repliée, l'un d'entre eux peut être empilé sur le deuxième, en insérant les pattes de chaque support de montant dans une extrémité supérieure des supports de montant du deuxième râtelier. La présence de ces pattes permet de faciliter cette opération d'empilage, et également d'améliorer le maintien du premier râtelier par rapport au deuxième râtelier en position empilée, en limitant la possibilité de translation, selon un plan horizontal, du premier râtelier par rapport au deuxième râtelier. Cela permet notamment de sécuriser le transport de plusieurs râteliers empilés les unes sur les autres. Par ailleurs, davantage de râteliers peuvent être empilés les uns sur les autres de manière similaire, par exemple quatre. Cela permet de faciliter le stockage des râteliers ainsi que leur transport.

Dans certains modes de réalisation, la barrière avant est un élément ouvrant fixé à un montant d'un des éléments latéraux par l'intermédiaire d'une liaison pivot d'axe vertical.

En d'autres termes, la barrière avant peut, de manière similaire à une porte, passer d'une position fermée à une position ouverte en pivotant autour d'un axe vertical. La position ouverte permet d'accéder à l'intérieur du râtelier, et permet notamment de disposer du fourrage sur la structure de plancher. La position fermée permet de limiter l'accès à l'intérieur du râtelier.

Dans certains modes de réalisation, le râtelier comprend une structure de toit configurée pour se fixer aux montants des éléments repliables lorsqu'ils sont en position dépliée.

La structure de toit permet de protéger, notamment des intempéries, le fourrage disposé dans le râtelier, sur la structure de plancher.

Dans certains modes de réalisation, les supports de montant présentent la forme d'un manchon ayant une fente longitudinale.

On comprend par « longitudinal », la direction principale selon laquelle s'étend le manchon. En d'autres termes, la direction longitudinale peut être parallèle à la direction verticale, c'est-à-dire perpendiculaire à la structure de plancher. Les supports de montant présentent ainsi une structure creuse, limitant la masse de ces supports. Par ailleurs, la fente longitudinale permet aux montants de s'y loger, lorsque l'élément pliable est en position dépliée.

Dans certains modes de réalisation, les supports de montant présentent, selon une section perpendiculaire à leur axe longitudinal, un profil en U.

De préférence, les montants des éléments pliables présentent une forme et des dimensions complémentaires au profil en U des supports de montant, de manière à ce que les montants puissent se loger dans la fente formée par la forme en U. En outre, ce profil en U permet d'améliorer le maintien des montants des éléments pliables, lorsque ces derniers sont en position dépliée.

Dans certains modes de réalisation, les parois latérales de la forme en U des supports de montant comprennent une pluralité d'orifices répartis le long de l'axe longitudinal des supports de montant.

La présence de cette pluralité d'orifice permet de pouvoir choisir la position, selon l'axe longitudinal, de la liaison articulée entre les montants, ou les pieds, et les supports de montant. Ces orifices permettent également, en coïncidant avec des orifices présents sur les montants des éléments pliables, ou sur les pieds, de pouvoir insérer l'axe des moyens de verrouillage permettant de maintenir les éléments pliables, ou sur les pieds, en position dépliée.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] la figure 1 représente une vue en perspective d'un râtelier assemblé, selon le présent exposé ;
[Fig. 2] la figure 2 représente une vue en perspective du châssis et des éléments pliables de la figure 1, les éléments pliables étant en position dépliée ;
[Fig. 3] la figure 3 représente une vue en perspective du châssis de la figure 2, les éléments pliables étant en position repliée ;
[Fig. 4] la figure 4 représente une vue en perspective d'un agencement dans lequel plusieurs éléments du râtelier sont rangés sur les éléments pliables en position repliée ;
[Fig. 5] la figure 5 représente une vue en perspective de deux râteliers repliés et empilés l'un sur l'autre.

### Description des modes de réalisation

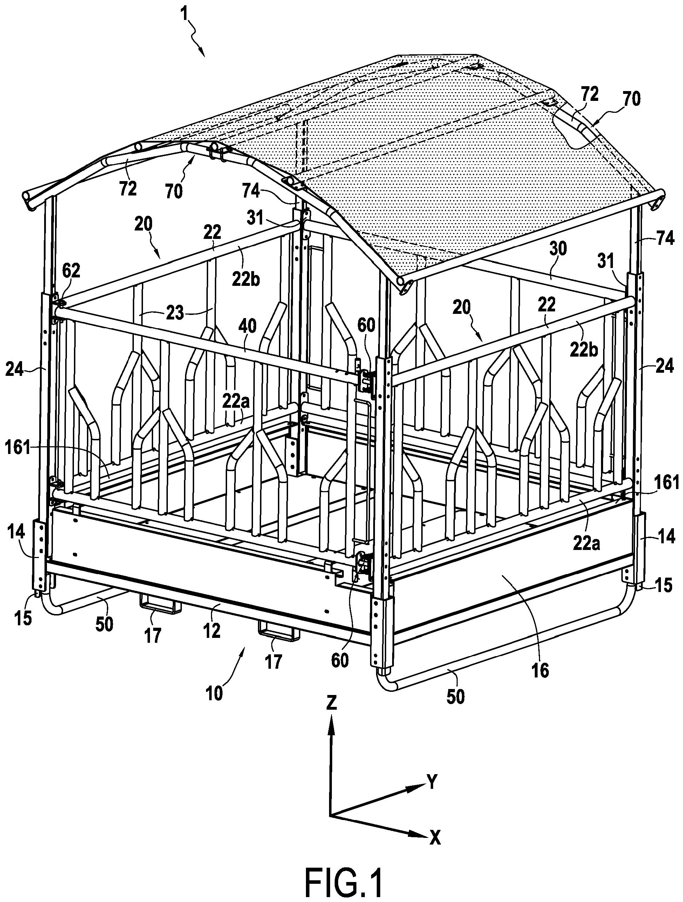

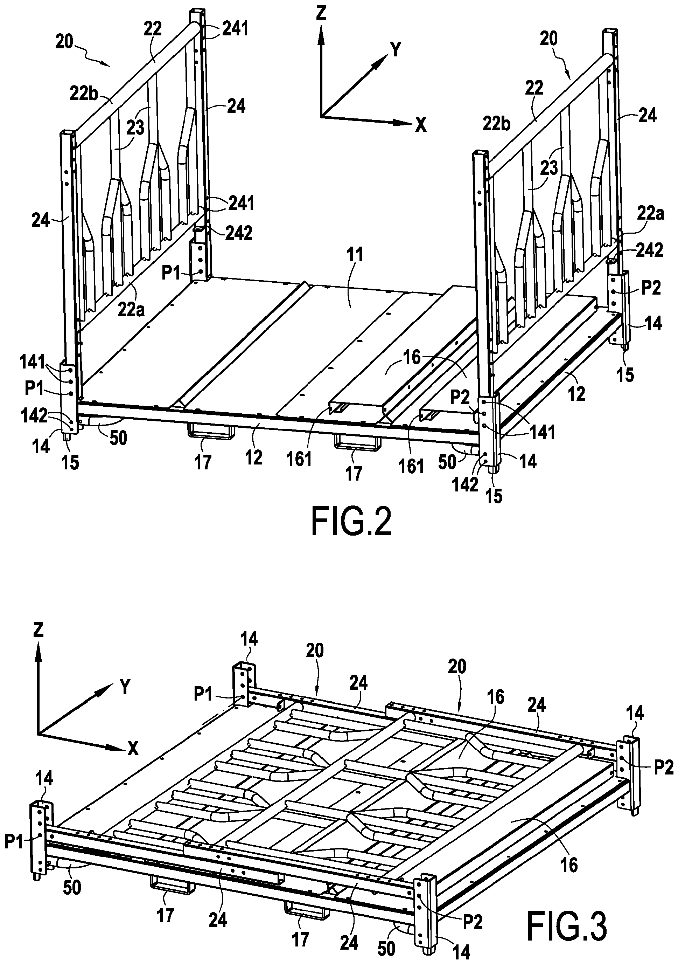

La figure 1 représente une vue en perspective d'un râtelier 1 assemblé selon le présent exposé. Le râtelier 1 comprend notamment un châssis 10, des pieds escamotables 50, deux éléments pliables 20 fixés au châssis 10 et formant les éléments latéraux du râtelier, une barrière arrière 30, et une barrière avant 40. La figure 2 représente une vue en perspective du châssis 10, des pieds escamotables 50 et des éléments pliables 20 en position dépliée.

Le châssis 10 est formé par un assemblage de pièces tubulaires métalliques. En particulier, le châssis 10 comprend un cadre 12, de préférence carré, et une pluralité du tubes métalliques (non visibles), par exemple des barreaux ou longerons parallèles fixés au cadre 12 et s'étendant entre les côtés du cadre 12. Le cadre 12 et la pluralité de tubes métalliques permettent de porter une structure de fond 11, ou plancher, cette dernière étant fixée sur une face supérieure du cadre 12. La structure de plancher 11 comporte une ou plusieurs tôles métalliques, et est destinée à recevoir la fourrage permettant de nourrir les animaux.

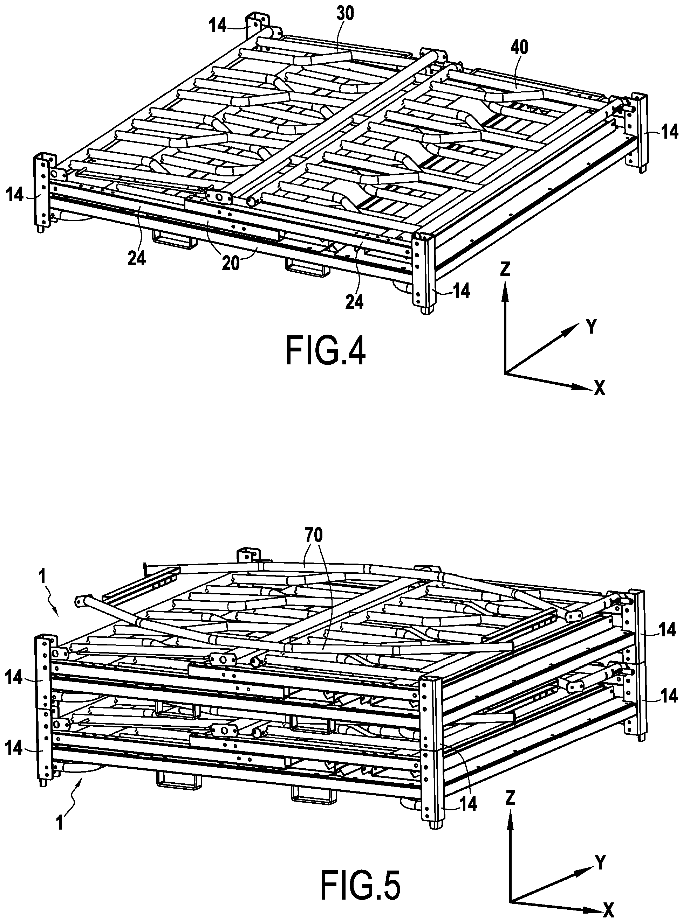

Le châssis 10 comporte également des supports de montant 14, sur lesquels peuvent se fixer les montants 24 décrits ci-dessous. Selon ce mode de réalisation, un support de montant 14 est fixé à chaque coin du cadre 12. Chaque support de montant 14 présente la forme d'une gouttière s'étendant selon une direction Z verticale, perpendiculaire au plan XY formé par le cadre 12, une portion du support de montant 14 s'étendant d'un côté dudit cadre 12, et une portion de support de montant s'étendant de l'autre côté dudit cadre 12, selon la direction Z. Chaque support de montant 14 présente, selon une section perpendiculaire à son axe longitudinal, un profil en U. Par ailleurs, une extrémité inférieure des supports de montant 14 comprend une patte 15 faisant saillie depuis ladite extrémité inférieure. La patte 15 peut être une équerre soudée sur des faces internes du support de montant 14 en épousant la forme en U de ce dernier. Plus généralement, la forme et les dimensions de la patte 15 permettent à celle-ci de s'emmancher dans une extrémité supérieure d'un support de montant 14 d'un autre râtelier analogue au râtelier 1 décrit ici, lorsque le râtelier 1 est empilé sur cet autre râtelier. La figure 5 illustre un tel empilage de deux râteliers 1 selon le présent exposé.

Chaque élément pliable 20 comprend deux montants 24 et une barrière ajourée 22. La barrière ajourée 22 comprend par exemple deux tubes, ou longerons inférieur 22a et supérieur 22b, s'étendant dans une direction sensiblement horizontale, c'est-à-dire la direction Y sur les figures, et comprenant deux extrémités libres fixées chacun à un montant 24. La barrière ajourée 22 comprend également une série de tubes 23 s'étendant dans une direction sensiblement verticale (c'est-à-dire la direction Z sur les figures lorsque les éléments pliables sont en position dépliée), entre les deux longerons 22a, 22b. Les barrières ajourées 22 sont ainsi configurées pour permettre aux animaux de passer leur tête entre les tubes 23 afin d'atteindre le fourrage disposé sur la structure de plancher 11.

Les montants 24 présentent une structure tubulaire creuse de section rectangulaire, de préférence carré. Les dimensions de cette structure tubulaire permettent à une extrémité inférieure des montants 24 de s'engager dans la gouttière formée par les supports de montant 14, notamment dans le profil en U, par complémentarité de formes. Les parois des montants 24 s'étendant dans le plan XZ, lorsque l'élément pliable 20 est en position dépliée, comprennent des orifices. Ces orifices (non visibles sur la fig. 2) sont disposés de telle sorte que, lorsque les éléments pliables 20 sont en position dépliée, ils soient en vis-à-vis, c'est-à-dire coaxiaux, avec des orifices 141 disposés sur les parois latérales du profil en U des supports de montant 14. Ainsi, les montants 24 sont fixés aux supports de montant 14 par l'intermédiaire d'une liaison pivot s'étendant à travers ces orifices, selon la direction horizontale, c'est-à-dire l'axe Y sur les figures. Selon ce mode de réalisation, chaque support de montant 14 comprend trois orifices 141 alignés dans la direction Z. Il est ainsi possible de choisir la position, selon la direction Z, de la liaison pivot entre le support de montant 14 et le montant 24.

Dans cet exemple, une première liaison pivot P1 entre un premier élément pliable 20 et les supports de montant 14 est disposée au niveau du premier orifice 141, c'est-à-dire l'orifice 141 le plus proche du cadre 12. Une deuxième liaison pivot P2 entre le deuxième élément pliable 20 et le châssis 10 est disposée au niveau de l'orifice 141 central. Ainsi, lorsque le premier élément pliable 20 est disposé en position repliée contre la structure de plancher 11, le deuxième élément pliable 20 peut être aisément replié sur le premier élément pliable 20 et de manière ergonomique, offrant ainsi une structure repliée plus compact. Cette configuration repliée est illustrée sur les figures 3 à 5. on notera en outre que cette configuration permet de libérer un espace entre le deuxième élément pliable 20 en position repliée et le plancher 11, dans lequel d'autres éléments du râtelier peuvent être rangés. Dans cet exemple, les côtés de cadre 16 décrits ci-dessous sont disposés dans cet espace (cf. figure 3).

De plus, les éléments pliables 20 sont maintenus en position dépliée par l'intermédiaire de moyens de verrouillage comprenant un axe, par exemple une goupille (non représentée). Cette goupille peut être insérée au travers des orifices 141 et des orifices des montants 24 ne servant pas à la liaison pivot. Cette goupille peut être fixée au support de montant 14 ou au cadre 12 par l'intermédiaire d'une chainette, par exemple. Ainsi, il est possible de passer à la position dépliée (figure 2) à la position repliée (figure 3) en retirant simplement les goupilles et faisant pivoter manuellement le premier élément pliable 20 jusqu'au plancher 11, puis le deuxième élément pliable 20 jusqu'au premier élément pliable 20.

Les parois des montants 24 s'étendant dans le plan YZ, lorsque l'élément pliable 20 est en position dépliée, comprennent également des orifices 241. En position dépliée, ces orifices 241 permettent de fixer d'autres éléments du râtelier 1. En particulier, la barrière arrière 30 comprend des portions de fixation 31, ces portions comprenant une plaque plane prenant appui contre la paroi du montant 24 et ayant des orifices permettant, avec les orifices 241, de fixer la barrière 30 au montant 24 par l'intermédiaire d'une liaison boulonnée. La barrière arrière 30 sert ainsi d'entretoise pour les éléments pliables 20 lorsque ces derniers sont en position dépliés.

La barrière avant 40 est également fixée à chaque élément pliable 20 par l'intermédiaire d'orifices 241. Sur l'un des éléments pliables 20, la barrière avant est fixée par l'intermédiaire d'une liaison pivot d'axe vertical Z, formant une charnière 62. Sur l'autre des éléments pliables 20, la barrière avant 40 est fixée de manière amovible par l'intermédiaire d'un verrou de fermeture 60, pouvant bloquer ou libérer la barrière avant 40. La barrière avant 40 sert ainsi de porte pouvant passer d'une position fermée à une position ouverte par l'intermédiaire du verrou de fermeture 60, et en pivotant autour de la charnière 62. Le verrou de fermeture 60 peut être un dispositif tel que décrit dans le document FR3068722.

Les orifices 241 peuvent également servir à fixer la structure de toit 70, notamment des montants 74 de la structure de toit 70, par l'intermédiaire d'une liaison boulonnée. Par ailleurs, la structure de toit 70 comprend deux arceaux 72, rapportés chacune sur deux montants 74. La forme des arceaux 72 est adaptée pour supporter un panneau de toit rapporté, représenté en grisé sur la figure 1. Les montants 74 comportent chacun deux tubes destinés à s'emmancher dans l'extrémité supérieure de deux montants 24.

Les pieds 50 présentent chacun la forme d'un arceau, ou de patin, dont les extrémités sont fixées à un support de montant 14. Selon ce mode de réalisation, les extrémités des pieds 50 sont fixées aux supports de montant 14 au moyen d'une liaison pivot. Ils peuvent ainsi passer d'une position active, ou dépliée, dans laquelle ils sont en contact avec le sol et permettent de surélever le châssis 10 par rapport au sol comme illustré sur la figure 1, à une position inactive, ou repliée, dans laquelle les pieds 50 sont repliés contre le cadre de châssis 12, comme illustré sur la figure 2. Des orifices 142 sont également disposés sur les parois latérales du profil en U des supports de montant 14. Ainsi, les pieds 50 sont fixés aux supports de montant 14, sous le cadre de châssis 12, par l'intermédiaire d'une liaison pivot s'étendant à travers ces orifices, selon la direction horizontale, c'est-à-dire l'axe Y sur les figures. Selon ce mode de réalisation, chaque support de montant 14 comprend deux orifices 142 alignés dans la direction Z. Un premier orifice 142, disposé le plus proche du cadre 12, comprend la liaison pivot, et un deuxième orifice, plus éloigné du cadre 12 que le premier orifice, permet de maintenir les pieds 50 en position active par l'intermédiaire de moyens de verrouillage comprenant un axe, par exemple une goupille (non représentée). Cette goupille peut être insérée au travers des orifices 142 et des orifices des pieds 50 ne servant pas à la liaison pivot. Cette goupille peut être fixée au support de montant 14 ou au cadre 12 par l'intermédiaire d'une chainette, par exemple. Ainsi, il est possible de passer à la position active (figure 1) à la position inactive (figure 2) en retirant simplement les goupilles et faisant pivoter manuellement les pieds 50 jusqu'au cadre de châssis 12.

Des cales de transport 17 sont également prévues et fixées sur une face inférieure du cadre de châssis 12. Elles permettent le passage des fourches d'un engin élévateur pour l'enlèvement du râtelier, en assurant le positionnement du râtelier lors du transport de ce dernier.

Le râtelier 1 comprend en outre quatre côtés de cadre 16. Les côtés de cadre 16 sont des plaques métalliques s'étendant chacune le long d'un côté du cadre 12, et entre ledit côté et le longeron inférieur 22a d'une barrière 22. Les côtés de cadre 16 peuvent comporter le long de leurs bordures longitudinales inférieure et supérieure, un repli 161 orienté vers l'intérieur du râtelier. Ces replis 161permettent notamment de fixer les côtés de cadre 16 sur un élément du râtelier 1. A cet effet, les montant 24 comportent chacun une languette de fixation 242, sous la barrière 22, sur laquelle un repli 161 d'un côté de cadre 16 peut se fixer. Les côtés de cadre 16 permettent notamment de limiter la perte de foin, en bouchant au moins en partie les espaces existant entre les barrières 22, 30 et 40 et le cadre 12 du châssis.

Comme décrits ci-dessus, et en référence aux figures, le châssis 10 comporte quatre côtés, et est de préférence carré, présentant par exemple des dimensions de 2X1.50 mètres, 2X2 mètres, ou 2X3 mètres. Par ailleurs, les supports de montant 14 présentent une longueur, selon la direction Z, comprise entre 25 et 50 cm, de préférence entre 30 et 45 cm. Lorsque les éléments pliables 20 et les pieds 50 sont en position repliée, comme illustré sur les figures 3 et 4, l'encombrement total du râtelier, selon la direction Z, est déterminé par les supports de montant 14. En d'autres termes, l'encombrement selon la direction Z du cadre 12, des pieds 50 et des éléments pliables 20 en position repliée est inférieur ou égal, de préférence strictement inférieur, à la longueur des supports de montant 14 selon cette direction Z. Ainsi, lorsque les éléments pliables 20 et les pieds 50 sont en position repliée, un espace est encore disponible entre les éléments pliables 20 et les extrémités supérieures et inférieures des supports de montant 14. Cet espace permet notamment de disposer de manière compacte les autres éléments du râtelier tels que les barrières 30 et 40 ou la structure de toit 70, en vue du stockage et du transport du râtelier. Un espace est également disponible entre la face inférieure du cadre de châssis, sous le plancher 11, et les extrémités inférieures des supports de montant 14 lorsque les pieds 50 sont en position repliée. Cet espace permet de faciliter l'empilage de plusieurs râteliers 1 les uns sur les autres. Cette configuration est illustrée sur la figure 5.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Râtelier pliable (1) pour animaux d'élevage tels que du bétail, comprenant un châssis (10) ayant un cadre (12) portant une structure de plancher (11) configurée pour recevoir du fourrage pour les animaux, des pieds (50) fixés de manière escamotable au châssis (10), et au moins deux éléments pliables (20) fixés sur deux côtés opposés dudit châssis (10), chaque élément pliable (20) comprenant deux montants (24) et une structure de barrière ajourée (22) s'étendant entre et étant portée par les deux montants (24), les deux montants (24) de chaque élément pliable (20) étant chacun fixés au châssis (10) au moyen d'une liaison articulée, de manière à ce que les éléments pliables (20) soient mobiles entre une position dépliée permettant le passage de la tête des animaux à travers la barrière (22), et une position repliée dans laquelle les éléments pliables (20) sont repliés sur une face supérieure de la structure de plancher (11), les éléments pliables (20) étant des éléments latéraux, le râtelier (1) comprenant en outre une barrière arrière (30) et une barrière avant (40) disposées entre les éléments latéraux (20) lorsqu'ils sont en position dépliée, et fixées aux montants (24) desdits éléments latéraux.

2. Râtelier (1) selon la revendication 1, dans lequel la liaison articulée est une liaison pivot (P1, P2) d'axe horizontal.

3. Râtelier (1) selon la revendication 1 ou 2, dans lequel le châssis (10) comprend au moins un support de montant (14) pour chaque montant (24), les supports de montant (14) étant fixés au cadre de châssis (12), et chaque montant (24) des éléments pliables (20) étant fixé à un support de montant (14) au moyen de la liaison articulée.

4. Râtelier (1) selon la revendication 3, dans lequel, selon une direction perpendiculaire à la structure de plancher (11), les supports de montant (14) présentent une longueur comprise entre 25 et 50 cm, de préférence entre 30 et 45 cm.

5. Râtelier (1) selon la revendication 3 ou 4, dans lequel, selon une direction perpendiculaire à la structure de plancher (11), une distance entre le cadre de châssis (12) et la liaison articulée entre le montant (24) et le support de montant (14) est inférieure à 15 cm, de préférence inférieure à 10 cm.

6. Râtelier (1) selon l'une quelconque des revendications 3 à 5, dans lequel les pieds (50) sont fixés aux supports de montant (14).

7. Râtelier (1) selon l'une quelconque des revendications 1 à 6, dans lequel les pieds (50) sont fixés au châssis (10) de manière articulée, de manière à ce que les pieds (50) soient mobiles entre une position dépliée permettant de surélever le cadre de châssis (12) par rapport au sol, et une position repliée dans laquelle les pieds (50) sont repliés sur une face inférieure de la structure de plancher (11).

8. Râtelier (1) selon l'une quelconque des revendications 3 à 6, dans lequel au moins un support de montant (14) comprend un moyen de verrouillage comprenant un axe pour verrouiller un élément pliable (20) dans la position dépliée.

9. Râtelier (1) selon l'une quelconque des revendications 3 à 8 en tant que dépendantes de la revendication 3, râtelier (1) étant un premier râtelier dans lequel les supports de montant (14) comprennent une patte (15) faisant saillie depuis leur extrémité inférieure, chaque patte (15) étant configurée pour s'emmancher dans une extrémité supérieure d'un support de montant (14) d'un deuxième râtelier (1) analogue au premier râtelier, lors de l'empilage du premier râtelier sur le deuxième râtelier.

10. Râtelier (1) selon l'une quelconque des revendications 1 à 9, dans lequel la barrière avant (40) est un élément ouvrant fixé à un montant (24) d'un des éléments latéraux (20) par l'intermédiaire d'une liaison pivot (62) d'axe vertical.

11. Râtelier (1) selon l'une quelconque des revendications 1 à 10, comprenant une structure de toit (70) configurée pour se fixer aux montants (24) des éléments pliables (20) lorsqu'ils sont en position dépliée.

12. Râtelier (1) selon l'une quelconque des revendications 3 à 11 en tant que dépendantes de la revendication 3, dans lequel les supports de montant (14) présentent la forme d'un manchon ayant une fente longitudinale.

13. Râtelier (1) selon la revendication 12, dans lequel les supports de montant (14) présentent, selon une section perpendiculaire à leur axe longitudinal, un profil en U.

14. Râtelier (1) selon la revendication 13, dans lequel les parois latérales de la forme en U des supports de montant (14) comprennent une pluralité d'orifices (141, 142) répartis le long de l'axe longitudinal des supports de montant (14).

## Patentansprüche

1. Klappbare Raufe (1) für Nutztiere wie Rinder, umfassend ein Gestell (10), das einen Rahmen (12) aufweist, der eine Bodenstruktur (11) trägt, die dazu ausgestaltet ist, Futter für die Tiere aufzunehmen, Füße (50), die einklappbar an dem Gestell (10) fixiert sind, und mindestens zwei klappbare Elemente (20), die auf zwei gegenüberliegenden Seiten des Gestells (10) fixiert sind, wobei jedes klappbare Element (20) zwei Pfosten (24) und eine durchbrochene Einzäunungsstruktur (22) umfasst, die sich zwischen den zwei Pfosten (24) erstreckt und davon getragen wird, wobei die zwei Pfosten (24) von jedem klappbaren Element (20) jeweils mithilfe einer Gelenkverbindung an dem Gestell (10) fixiert sind, damit die klappbaren Elemente (20) zwischen einer auseinandergeklappten Position, die den Durchlass des Kopfes der Tiere durch die Einzäunung (22) ermöglicht, und einer zusammengeklappten Position beweglich sind, in der die klappbaren Elemente (20) an einer Oberseite der Bodenstruktur (11) zusammengeklappt sind, wobei die klappbaren Elemente (20) seitliche Elemente sind, wobei die Raufe (1) ferner eine hintere Einzäunung (30) und eine vordere Einzäunung (40) umfasst, die zwischen den seitlichen Elementen (20) angeordnet sind, wenn sie sich in der auseinandergeklappten Position befinden, und an den Pfosten (24) der seitlichen Elemente fixiert sind.

2. Raufe (1) nach Anspruch 1, wobei die Gelenkverbindung eine Schwenkverbindung (P1, P2) der horizontalen Achse ist.

3. Raufe (1) nach Anspruch 1 oder 2, wobei das Gestell (10) mindestens einen Pfostenträger (14) für jeden Pfosten (24) umfasst, wobei die Pfostenträger (14) an dem Gestellrahmen (12) fixiert sind, und jeder Pfosten (24) der klappbaren Elemente (20) mithilfe der Gelenkverbindung an einem Pfostenträger (14) fixiert ist.

4. Raufe (1) nach Anspruch 3, wobei die Pfostenträger (14) entlang einer Richtung senkrecht zu der Bodenstruktur (11) eine Länge zwischen 25 und 50 cm, vorzugsweise zwischen 30 und 45 cm aufweisen.

5. Raufe (1) nach Anspruch 3 oder 4, wobei entlang einer Richtung senkrecht zu der Bodenstruktur (11) ein Abstand zwischen dem Gestellrahmen (12) und der Gelenkverbindung zwischen dem Pfosten (24) und dem Pfostenträger (14) kleiner als 15 cm, vorzugsweise kleiner als 10 cm ist.

6. Raufe (1) nach einem der Ansprüche 3 bis 5, wobei die Füße (50) an den Pfostenträgern (14) fixiert sind.

7. Raufe (1) nach einem der Ansprüche 1 bis 6, wobei die Füße (50) an dem Gestell (10) gelenkig fixiert sind, damit die Füße (50) zwischen einer auseinandergeklappten Position, die das Erhöhen des Gestellrahmens (12) in Bezug auf den Boden ermöglicht, und einer zusammengeklappten Position beweglich sind, in der die Füße (50) an einer Unterseite der Bodenstruktur (11) zusammengeklappt sind.

8. Raufe (1) nach einem der Ansprüche 3 bis 6, wobei mindestens ein Pfostenträger (14) ein Verriegelungsmittel umfasst, das eine Achse zum Verriegeln eines klappbaren Elements (20) in der auseinandergeklappten Position umfasst.

9. Raufe (1) nach einem der Ansprüche 3 bis 8, wenn abhängig von Anspruch 3, wobei die Raufe (1) eine erste Raufe ist, bei der die Pfostenträger (14) eine Lasche (15) umfassen, die von ihrem unteren Ende hervorsteht, wobei jede Lasche (15) dazu ausgestaltet ist, sich in ein oberes Ende eines Pfostenträgers (14) einer zweiten Raufe (1), die zu der ersten Raufe analog ist, einzupassen, wenn die erste Raufe auf die zweite Raufe gestapelt wird.

10. Raufe (1) nach einem der Ansprüche 1 bis 9, wobei die vordere Einzäunung (40) ein sich öffnendes Element ist, das an einem Pfosten (24) von einem der seitlichen Elemente (20) durch eine Schwenkverbindung (62) der vertikalen Achse fixiert ist.

11. Raufe (1) nach einem der Ansprüche 1 bis 10, umfassend eine Dachstruktur (70), die dazu ausgestaltet ist, an den Pfosten (24) der klappbaren Elemente (20) fixiert zu werden, wenn sie sich in der auseinandergeklappten Position befinden.

12. Raufe (1) nach einem der Ansprüche 3 bis 11, wenn abhängig von Anspruch 3, wobei die Pfostenträger (14) die Form eines Anschlussstücks aufweisen, das einen Längsschlitz aufweist.

13. Raufe (1) nach Anspruch 12, wobei die Pfostenträger (14) entlang eines Abschnitts senkrecht zu ihrer Längsachse ein U-Profil aufweisen.

14. Raufe (1) nach Anspruch 13, wobei die Seitenwände der U-Form der Pfostenträger (14) mehrere Öffnungen (141, 142) umfassen, die entlang der Längsachse der Pfostenträger (14) verteilt sind.

## Claims

1. A collapsible rack (1) for farm animals such as livestock, comprising a chassis (10) having a frame (12) carrying a floor structure (11) configured to receive fodder for animals, legs (50) fixed to the chassis (10) in a retractable manner, and at least two collapsible elements (20) fixed on two opposite sides of said chassis (10), each collapsible element (20) comprising two posts (24) and an openwork barrier structure (22) extending between and being carried by the two posts (24), the two posts (24) of each collapsible element (20) each being fixed to the chassis (10) by means of a hinged connection, such that the collapsible elements (20) are movable between an unfolded position allowing the passage of the head of the animals through the barrier (22), and a folded position in which the collapsible elements (20) are folded on an upper face of the floor structure (11), the collapsible elements (20) being side elements, the rack (1) further comprising a rear barrier (30) and a front barrier (40) disposed between the side elements (20) when they are in the unfolded position, and fixed to the posts (24) of said side elements.

2. The rack (1) according to claim 1, wherein the hinged connection is a pivot connection (P1, P2) of horizontal axis.

3. The rack (1) according to claim 1 or 2, wherein the chassis (10) comprises at least one post support (14) for each post (24), the post supports (14) being fixed to the chassis frame (12), and each post (24) of the collapsible elements (20) being fixed to a post support (14) by means of the hinged connection.

4. The rack (1) according to claim 3, wherein, along a direction perpendicular to the floor structure (11), the post supports (14) have a length of between 25 and 50 cm, preferably between 30 and 45 cm.

5. The rack (1) according to claim 3 or 4, wherein, along a direction perpendicular to the floor structure (11), a distance between the chassis frame (12) and the hinged connection between the post (24) and the post support (14) is less than 15 cm, preferably less than 10 cm.

6. The rack (1) according to any one of claims 3 to 5, wherein the legs (50) are fixed to the post supports (14).

7. The rack (1) according to any one of claims 1 to 6, wherein the legs (50) are fixed to the chassis (10) in a hinged manner, such that the legs (50) are movable between an unfolded position for raising the chassis frame (12) relative to the ground, and a folded position in which the legs (50) are folded on a lower face of the floor structure (11).

8. The rack (1) according to any one of claims 3 to 6, wherein at least one post support (14) comprises a locking means comprising an axis for locking a collapsible element (20) in the unfolded position.

9. The rack (1) according to any one of claims 3 to 8 when dependent on claim 3, the rack (1) being a first rack in which the post supports (14) comprise a lug (15) protruding from their lower end, each lug (15) being configured to fit into an upper end of a post support (14) of a second rack (1) similar to the first rack, when stacking the first rack on the second rack.

10. The rack (1) according to any one of claims 1 to 9, wherein the front barrier (40) is an opening element fixed to a post (24) of one of the side elements (20) by means of a vertical axis pivot connection (62).

11. The rack (1) according to any one of claims 1 to 10, comprising a roof structure (70) configured to be fixed to the posts (24) of the collapsible elements (20) when they are in the unfolded position.

12. The rack (1) according to any one of claims 3 to 11 when dependent on claim 3, wherein the post supports (14) are in the form of a sleeve having a longitudinal slot.

13. The rack (1) according to claim 12, wherein the post supports (14) have a U-shaped profile along a section perpendicular to their longitudinal axis.

14. The rack (1) according to claim 13, wherein the side walls of the U-shape of the post supports (14) comprise a plurality of orifices (141, 142) distributed along the longitudinal axis of the post supports (14).
